# EUROPEAN PATENT SPECIFICATION

(11) **EP 4 159 634 B1**
(45) Date of publication and mention of the grant of the patent: **27.03.2024**
(21) Application number: 22196515.5
(22) Date of filing: 20.09.2022
(51) Int. Cl.: B29L 31/56, B65D 5/74, B29C 37/00, B29C 45/14

(54) **OPENING DEVICE FOR A PACKAGE, MOLD FOR MOLDING AN OPENING DEVICE FOR A PACKAGE AND PACKAGE HAVING AN OPENING DEVICE**
ÖFFNUNGSVORRICHTUNG FÜR EINE VERPACKUNG, FORM ZUM FORMEN EINER ÖFFNUNGSVORRICHTUNG FÜR EINE VERPACKUNG UND VERPACKUNG MIT EINER ÖFFNUNGSVORRICHTUNG
DISPOSITIF D'OUVERTURE POUR UN EMBALLAGE, MOULE POUR MOULER UN DISPOSITIF D'OUVERTURE POUR UN EMBALLAGE ET EMBALLAGE DOTÉ D'UN DISPOSITIF D'OUVERTURE

(30) Priority: 30.09.2021 EP 21200038
(43) Date of publication of application: 05.04.2023
(73) Proprietor: Tetra Laval Holdings & Finance S.A., 1009 Pully (CH)
(72) Inventor: ZANON, Paolo, 41122 Modena (IT); MARTINI, Pietro, 43122 Parma (IT); VIETRI, Anna Rosa, 41122 Modena (IT); DE PAOLA, Rocco, 41122 Modena (IT)
(74) Representative: Tetra Pak - Patent Attorneys SE

(56) References cited:
- EP-A1- 2 955 122
- WO-A1-01/25106
- JP-A- 2007 223 668
- JP-A- 2014 084 141
- US-A1- 2017 327 276
- US-A1- 2019 359 370

## Description

### TECHNICAL FIELD

The present invention relates to an opening device for a package, in particular a package having a main body, filled with a pourable product, even more particular filled with a pourable food product.

Furthermore, the present invention also relates to a mold for molding an opening device for a package, in particular a package having a main body, filled with a pourable product, even more particular filled with a pourable food product.

Advantageously, the present invention also relates to a package, in particular a package having a main body, filled with a pourable product, even more particular filled with a pourable food product, and comprising an opening device.

### BACKGROUND ART

As is known, many liquid or pourable food products, such as fruit juice, milk, milk-based drinks, drinking yoghurt, wine, tomato sauce, salt, sugar etc., are sold in packages, in particular sealed packages, made of a sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. layers of polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Thus, such a type of package comprises a main body formed from a multilayer packaging material and has a designated pour opening, which allows the outpouring of the pourable product from the package. Preferentially, the package is also provided with an opening device, which allows a sealing of the designated pour opening prior to a first use of the package.

A typical opening device is arranged about the designated pour opening and is designed to seal the package prior to a first opening of the opening device.

Therefore, some kinds of opening devices comprise a closing element having a main wall rupturably connected to a collar or base frame of the opening device. A user needs to remove the main wall, which when the opening device is used for the very first-time, leads to a rupturing of the main wall from the collar or the base frame.

In order to facilitate the removal, the closing element also comprises a pulling device connected to the main wall. Any separation force is transferred to the main wall by means of the pulling device.

A known pulling device comprises a leg element integrally connected to the main wall and a coupling ring integrally connected to the leg element.

The leg element needs to be sufficiently stiff and secured onto the main wall such that during the exertion of a separation force the leg element remains attached to the main wall.

Even though the currently known opening devices provide for good results, a need is felt in the sector to further improve the opening devices and/or packages.

### DISCLOSURE OF INVENTION

It is therefore an object of the present invention to provide in a straightforward and low-cost manner an improved opening device for a package, in particular a package having a main body formed from a multilayer packaging material, filled with a pourable product, even more particular filled with a pourable food product.

It is another object of the present invention to provide in a straightforward and low-cost manner a mold for molding an improved opening device.

It is a further object of the present invention to provide in a straightforward and low-cost manner a package, in particular a package having a main body formed from a multilayer packaging material, filled with a pourable product, in particular filled with a pourable food product, having an improved opening device.

According to the present invention, there is provided an opening device according to the independent claim.

Further advantageous embodiments of the opening device are specified in the claims directly or indirectly depending on claim 1.

According to the present invention, there is also provided a mold according to claim 12.

According to the present invention, there is also provided a package according to claim 13, claim 14 or claim 15.

US2017/327276A1 discloses a lid for an opening device for a container that includes a body having a longitudinal axis and provided with an end wall and with a side wall internally provided with a thread element suitable for cooperating with a further thread element of a spout of the opening device, the lid further includes at least one driving element having a first side arranged to receive the fingers of a user during unscrewing of the lid from the spout and a second side arranged for receiving the fingers of a user during screwing of the lid on the spout, the first side being defined by a wall and the second side being defined by a cavity.

US2019/359370A1 discloses a package for pourable food products and method for moulding a polymeric opening portion to a packaging sheet material. The package can include an opening portion and a weakening feature. In some embodiments, the opening portion can be made of a polymer composition. In some embodiments, the weakening feature has a thickness below 200 micrometers and is thinner than parts of the opening portion directly adjacent to said weakening feature. The polymer composition can include sodium sulphite particles. In some embodiments, the sodium sulphite particles have the following size characteristics: (i) 0% having a size above 75 micrometers, and (ii) an average size below 25 micrometers. EP2955122 A1 also discloses a package for pourable food products and method for moulding a polymeric opening device to the package.

### BRIEF DESCRIPTION OF THE DRAWINGS

Two non-limiting embodiments of the present invention will be described by way of example with reference to the accompanying drawings, in which:
Figure 1 is a schematic perspective view of a portion of a package having an opening device according to a first embodiment of the present invention, with parts removed for clarity;
Figure 2 is a perspective view of the package of Figure 1 and focusing on a detail of the opening device of Figure 1, with parts removed for clarity;
Figure 3 is an enlarged perspective view of the detail of the opening device of Figure 2, with parts removed for clarity;
Figure 4 is an enlarged perspective section view of a portion of the detail of Figure 3, with parts removed for clarity;
Figure 5 is an enlarged perspective and partially sectioned view of the portion of Figure 4, with parts removed for clarity;
Figures 6a and 6b are top and partially sectioned views of the portion of Figures 4 and 5, with parts removed for clarity; and
Figure 7 is a perspective view of an opening device according to a second embodiment of the present invention, with parts removed for clarity.

### BEST MODES FOR CARRYING OUT THE INVENTION

Number 1 indicates as a whole a package (only partially shown to the extent necessary for the comprehension of the present invention) comprising:
- a main body 2, in particular a main body 2 formed from a multilayer packaging material, being filled and/or being fillable with a pourable product, in particular a pourable food product, and in particular having a designated pour opening (not shown and known as such) configured to allow for an outflow of the pourable product from main body 2; and
- an opening device 3, in particular formed from a polymer material, coupled to main body 2 about the designated pour opening and configured to seal the designated pour opening and to be controllable so as to open the designated pour opening and to allow for the outpouring of the pourable product.

The pourable product may be milk, tomato sauce, milk-based drinks, drinking yoghurt, water, sugar, salt, juices, emulsions, and the like.

According to some preferred non-limiting embodiments, the packaging material may comprise at least a layer of fibrous material, such as e.g. a paper or cardboard layer, and at least two layers of heat-seal plastic material, e.g. polyethylene layers, interposing the layer of fibrous material in between one another. One of these two layers of heat-seal plastic material may define the inner face of main body 2 contacting the pourable product.

Preferably, the packaging material may also comprise a layer of gas- and light-barrier material, e.g. aluminum foil or ethylene vinyl alcohol (EVOH) film, in particular being arranged between one of the layers of heat-seal plastic material and the layer of fibrous material. Preferentially but not necessarily, the packaging material may also comprise a further layer of heat-seal plastic material being interposed between the layer of gas- and light-barrier material and the layer of fibrous material.

Preferentially, each package 1, in particular the respective main body 2, may be obtained from a respective packaging blank of the multilayer packaging material. In particular, the packaging blank may define a precursor of the respective package 1, in particular the respective main body 2.

In more detail, the respective packaging blank may comprise the respective designated pour opening, which in particular may be covered by a separation membrane. The separation membrane may be formed from a gas-barrier material. In particular, the separation membrane may be defined by a portion of the layer of the gas- and light-barrier material.

According to some preferred non-limiting embodiments, the multilayer packaging material may be provided in the form of a web, thereby the packaging blanks may be successively arranged with respect to one another. During the formation of packages 1, the web is formed into a tube, longitudinally sealed, filled with the pourable product and transversally sealed and cut in correspondence with the extensions of the packaging blanks.

According to a preferred non-limiting embodiment, each opening device 3 may be applied, in particular molded, to the respective main body 2 or onto the respective packaging blank. Preferentially, each opening device 3 may be molded onto the respective packaging blank and about the designated pour opening. In particular and as will be explained further below, a first portion of opening device 3 may be molded onto the respective packaging blank and a second portion may be applied onto the first portion after molding of the first portion.

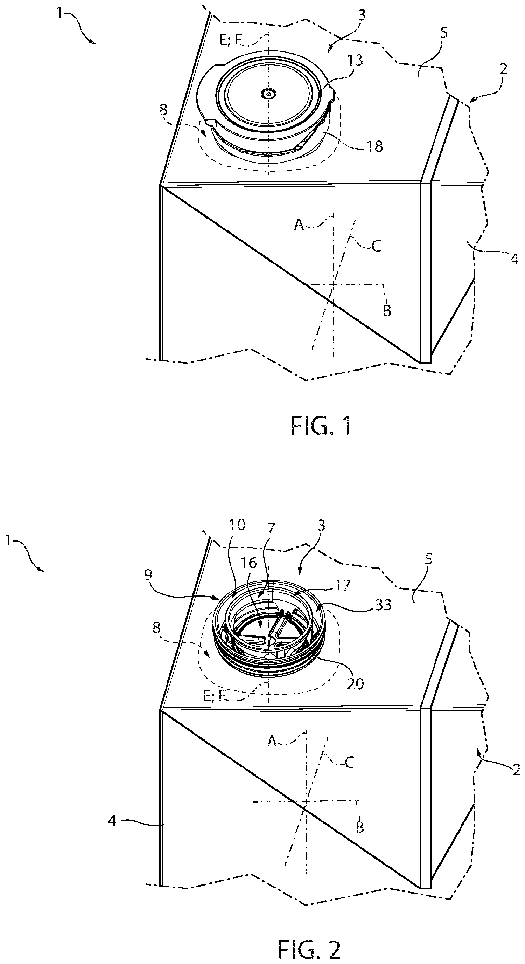

With particular reference to Figures 1 and 2, main body 2 may extend along a longitudinal axis A, a first transversal axis B perpendicular to longitudinal axis A and a second transversal axis C perpendicular to first transversal axis B and longitudinal axis A. In particular, the extension of package 2 along longitudinal axis A may be larger than the extension of package 2 along first transversal axis B and second transversal axis C.

Preferentially, main body 2 may be parallelepiped-shaped.

According to some preferred non-limiting embodiments, main body 2 may comprise a first wall (not shown and known as such), in particular being transversal, even more particular perpendicular, to longitudinal axis A, from which main body 2 may extend along longitudinal axis A. Preferably, the first wall may define a support surface of package 1, in particular main body 2, which may be designed to be put in contact with a support, such as e.g. a shelf, when, in use, being e.g. exposed within a sales point or when being stored. In particular, when being arranged on the support the first wall may define a bottom wall.

Preferably, main body 2 may also comprise a side wall 4 being (fixedly) connected to the first wall and extending, in particular substantially parallel, along longitudinal axis A, from the first wall.

Preferentially, main body 2 may also comprise a second wall 5 opposite to the first wall and being (fixedly) connected to side wall 4. In particular, side wall 4 may be interposed between the first wall and second wall 5.

In particular, when package 1 is arranged on a support second wall 5 may define a top wall.

According to the shown non-limiting embodiment, the first wall and second wall 5 may be parallel to one another.

According to non-limiting alternative embodiments not shown, the first wall and second wall 5 may be inclined with respect to one another. In particular, second wall 5 may define a slanted top or may define a portion of a gable-top.

According to some non-limiting embodiments, second wall 5 may carry and/or comprise the designated pour opening.

According to some preferred non-limiting embodiments, package 1, in particular main body 2, may comprise an inner space configured to contain and/or containing the pourable product. In particular, the first wall, side wall 4 and second wall 5 may delimit the inner space.

With particular reference to Figures 2 to 5, opening device 3 comprises a contact portion, in particular an annular contact portion, and a closing element 7 detachably and/or rupturably attached to, in particular fixed to, the contact portion and configured to close, in particular also to seal, the designated pour opening.

Furthermore, closing element 7 is configured to (rupturably) detach from the contact portion so as to free and/or open the designated pour opening for allowing the outpouring of the pourable product.

Moreover, opening device 3 may comprise:
- a base frame 8 coupling and/or configured to couple opening device 3 to package 1, in particular main body 2, even more particular to second wall 5, and about the designated pour opening; and
- a collar 9 extending, in particular transversally, even more particular perpendicularly, from base frame 8 and defining and/or delimiting a flow channel 10.

More specifically, flow channel 10 may extend between a pouring outlet 11 (of collar 9) configured to allow for the outpouring of the pourable product and an inlet (of collar 9) configured to allow for the introduction of the pourable product into flow channel 10.

In particular, collar 9 may extend along a central axis E and pouring outlet 11 and the inlet may be arranged at respective axial ends of collar 9.

In particular, closing element 7 may be arranged, in particular coaxially arranged, within flow channel 10.

Preferentially, closing element 7 may be coaxially positioned with respect to collar 9. In particular, closing element 7 may be coaxially arranged with respect to central axis E.

Preferentially, closing element 7 may be interposed between pouring outlet 11 and base frame 8 before the first opening of opening device 3 and after re-closing of opening device 3.

Additionally, opening device 3 may also comprise a closure 13 coupled and/or couplable to collar 9 and configured to selectively open and close pouring outlet 11.

Preferentially, closing element 7 and closure 13 may be connected, in particular fixed, to one another such that any movement of closure 13 results in a concurrent movement of closing element 7. In particular, closing element 7 and closure 13 may be connected to one another by means of fusing and/or welding and/or bonding and/or molding.

Preferentially, base frame 8, collar 9 and closing element 7 may be integrally formed, in particular in a single piece. In particular, base frame 8, collar 9 and closing element 7 may be formed during a molding process, in particular during molding of opening device 3 onto the respective packaging blank.

Furthermore, closure 13 may be coupled to collar 9 after formation of base frame 8, collar 9 and closing element 7.

In other words, base frame 8, collar 9 and closing element 7 may define the first portion of opening device 3 and closure 13 may define the second portion of opening device 3. Thus, closure 13 is applied to collar 9 after molding of base frame 8, collar 9 and closing element 7.

According to some preferred non-limiting embodiments, base frame 8 or collar 9, in the specific embodiment shown collar 9, may comprise the contact portion.

In more detail, an annular portion of collar 9 may define the contact portion. In particular, the annular portion faces flow channel 10.

With particular reference to Figures 2 to 5, closing element 7 comprises :
- a main wall 16, in particular a circular main wall 16, detachably and/or rupturably attached to the contact portion; and
- a pulling device 17 connected to main wall 16 and configured to allow for the exertion of a separation force on main wall 16 so as to detach main wall 16 and closing element 7 from the contact portion.

Preferentially, prior to detaching closing element 7, in particular main wall 16, from the contact portion, in particular for the first time, closing element 7, in particular main wall 16, may be configured to seal the designated pour opening and the inner space, in particular in cooperation with the contact portion. Afterwards, it may be possible to place closing element 7, in particular main wall 16, again within flow channel 10 such that closing element 7, in particular main wall 16, will close the designated pour opening, but may not seal the designated pour opening and the inner space anymore.

In more detail, main wall 16 may be controllable between an active position (see Figures 2 to 5) in which main wall 16 is configured to cover and/or close the designated pour opening and an inactive position (not shown) in which main wall 16 may be configured to free the designated pour opening. Prior to a first-time movement of main wall 16 from the active position to the inactive position, main wall 16 may be configured to seal the designated pour opening and the inner space of main body 2. After the first-time movement of main body 16 from the active position to the inactive position, it may be possible to newly place main body 16 in the active position for covering (but not sealing) the designated pour opening.

Pulling device 17 is configured to allow for a user to exert through pulling device 17 a separation force on main wall 16 such that main wall 16 irreversibly ruptures from the contact portion and/or that main wall 16 moves from the active position to the inactive position.

Preferentially, pulling device 17 may be connected to, in particular fused and/or welded and/or bond onto, closure 13. In this way, a user can, in use, exert the separation force by operating closure 13 and any movement of closure 13 is transferred to main wall 16 by pulling device 17. Such a solution can be considered to increase the user-friendliness of opening device 3.

Alternatively, a user could directly operate pulling device 17. In particular, according to some possible alternative embodiments, closure 13 and closing element 7 are not coupled and after removal of closure 13 a user could operate pulling device 17 so as to control closing element 7 from the active position to the inactive position.

In more detail, closure 13 may be movable between:
- a closing configuration, in which closure 13 covers pouring outlet 11, in particular for impeding an outflow of the pourable product out of pouring outlet 11; and
- an opening configuration in which closure 13 may be detached from pouring outlet 11, in particular for allowing an outflow of the pourable product through pouring outlet 11.

According to some possible embodiments, opening device 3 may comprise a ring 18 arranged about collar 9 and being connected to closure 13. In particular, closure 13 may be hinged to ring 18 and may be configured to angularly move between the opening configuration and the closing configuration.

Preferentially, closure 13 may be reversibly moved between the closing configuration and the opening configuration.

In particular, as closing element 7, in particular pulling device 17, may be connected, in particular fused and/or welded and/or bonded, to closure 13, the movement, in particular the angular movement, of closure 13 between the closing configuration and the opening configuration may result in movement of main wall 16 between respectively the active position and the inactive position.

It should be noted that package 1 may be immediately after its formation arranged in an initial configuration in which closure 13 and main wall 16 may be respectively in the closing configuration and in the active position. Package 1 may be distributed and/or sold to a user while being in the initial configuration.

With particular reference to Figures 2 to 5, pulling device 17 comprises :
- a plurality of leg elements 19, in the specific embodiment shown four, connected, in particular integrally connected to, and extending, in particular transversally, even more particular substantially perpendicularly, from main wall 16; and
- a coupling structure connected to the plurality of leg elements 19.

In more detail, the coupling structure may comprise a coupling ring 20.

According to some preferred non-limiting embodiments, the coupling structure, in particular coupling ring 20, may be connected, in particular fused and/or welded and/or bond, to closure 13, in particular an inner surface of closure 13. Preferentially, the inner surface of closure 13 may face flow channel 10 and/or pouring outlet 11 when closure 13 is arranged in the closing configuration.

Preferentially, leg elements 19 may be angularly displaced from one another about a central axis F of main wall 16. In particular, central axis F may be coaxial to central axis E with main wall 16 being in the active position.

Even more preferentially, leg elements 19 may be unevenly distributed from one another about central axis F. In this manner, it is possible to more precisely obtain the separation of main wall 16 from the contact portion.

Alternatively, leg elements 19 could be equally spaced about central axis F.

Leg elements 19 are integrally connected to main wall 16.

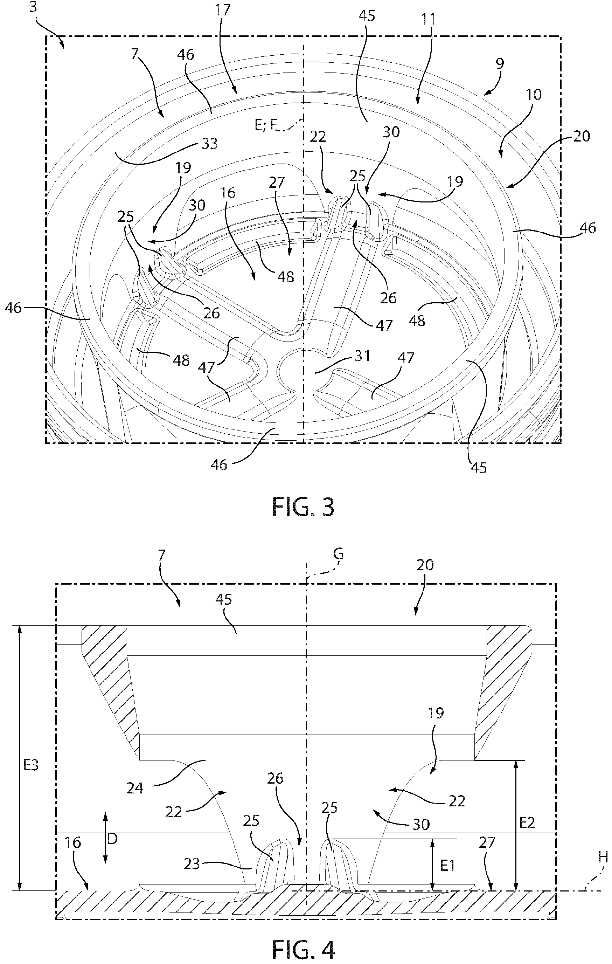

With particular reference to Figures 3 to 5, each leg element 19 comprises:
- an elongated pillar 22 extending along a longitudinal axis G, having a first end 23 and a second end 24 and being connected, in particular integrally connected, to main wall 16 at first end 23 and to the coupling structure, in particular coupling ring 20, at second end 24; and
- one or more stiffening ribs 25, in the specific case shown two, connected to a connection portion 26 of pillar 22.

Advantageously, each connection portion 26 comprises the respective first end 23 and has a first extension E1 along the respective longitudinal axis G, which equals or is less than half of a second extension E2, along the respective longitudinal axis G, of the respective pillar 22 from the respective first end 23 to the respective second end 24. Preferentially, first extension E1 may equal or may be less than one third of second extension E2.

By having the stiffening ribs 25 connected to the respective connection portion 26, which has a limited extension, it is possible on the one side to stabilize the respective pillar 22 and on the other side to guarantee a good deformability of the respective pillar 22 as it is e.g. advantageous during demolding i.e. during extraction of opening device 3 from a mold in which it has been manufactured.

In particular, each pillar 22 consists of connection portion 26 and a further portion extending from the respective connection portion 26 and to the respective second end 24.

Furthermore, each first extension E1 may be less than one third of a third extension E3, along the respective longitudinal axis G, of the respective pillar 22 together with the respective portion of the coupling structure, in particular coupling ring 20, connected to the respective pillar 22.

Preferentially, main wall 16 may comprise a first surface 27 facing away from and/or being designed to face away from the designated pour opening. In particular, first face 27 may extend within a plane H perpendicular to central axis E and/or central axis F and/or longitudinal axes G.

In particular, each pillar 22 transversally, in particular perpendicularly, extends from fist surface 27.

Even more particular, each first end 23 is in contact with first surface 27.

In particular, each first extension E1 and each second extension E2 are measured along a direction D orthogonal to main wall 16, in particular first surface 27, even more particular to plane H. Even more particular, each third extension E3 may be measured along direction D.

In particular, each stiffening rib 25 is integrally connected to main wall 16.

Preferentially, each leg element 19 may comprise two stiffening ribs 25 spaced apart from one another and connected to the respective connection portion 26.

Even more preferentially, each stiffening rib 25 may be connected to a respective lateral section of the respective connection portion 26.

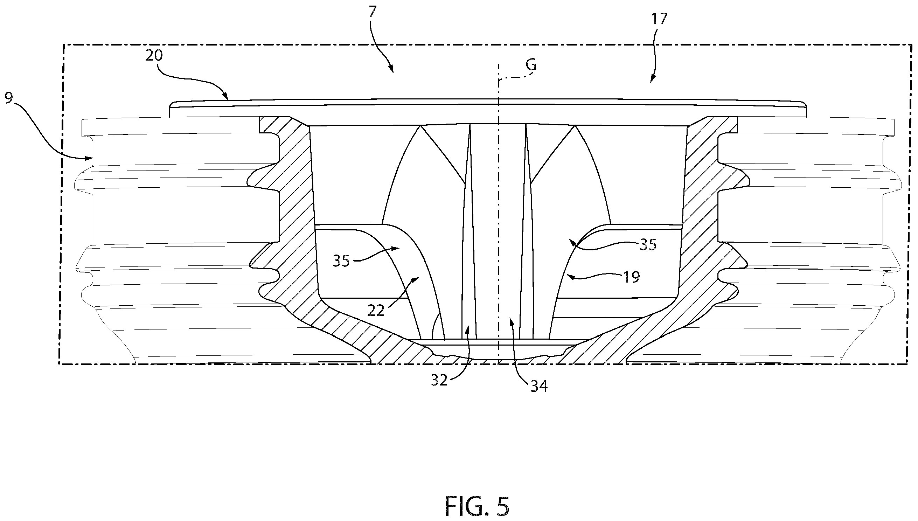

With particular reference to Figures 4 and 5, each pillar 22 may comprise an inner surface 30 facing towards a center 31 of main wall 16 and an outer surface 32 opposite to inner surface 30.

Preferentially, outer surface 32 may face an inner wall 33 of collar 9. Preferentially, inner wall 33 may delimit flow channel 10.

Reverting again to Figure 4, each stiffening rib 25 may be connected to inner surface 30.

In particular, each stiffening rib 25 may be arranged radially inside with respect to the respective leg element 19, and in particular with respect to central axis F.

With particular reference to Figure 5, each outer surface 32 may comprise a central surface portion 34 and two lateral surface portions 35, in particular interposing central surface portion 34 between one another.

In more detail, each lateral surface portion 35 may transversally extend from the respective central surface portion 34. In particular, each lateral surface portion 35 may also radially extend inside from the respective central surface portion 34.

Moreover, each outer surface 33 may be axially symmetric.

Preferentially, each lateral surface portion 35 may have a concave shape, in particular with respect to inner wall 33. Such lateral surface portions 35 allow to further facilitate demolding, in particular as leg elements 19 can be more easily separated from the respective mold.

Preferentially, each inner surface 30 may have a concave shape with respect to central axis E. In more detail, each inner surface 30 may correspond to a respective surface portion of a respective cylinder, in particular a cylinder having a central axis coaxial to central axis F.

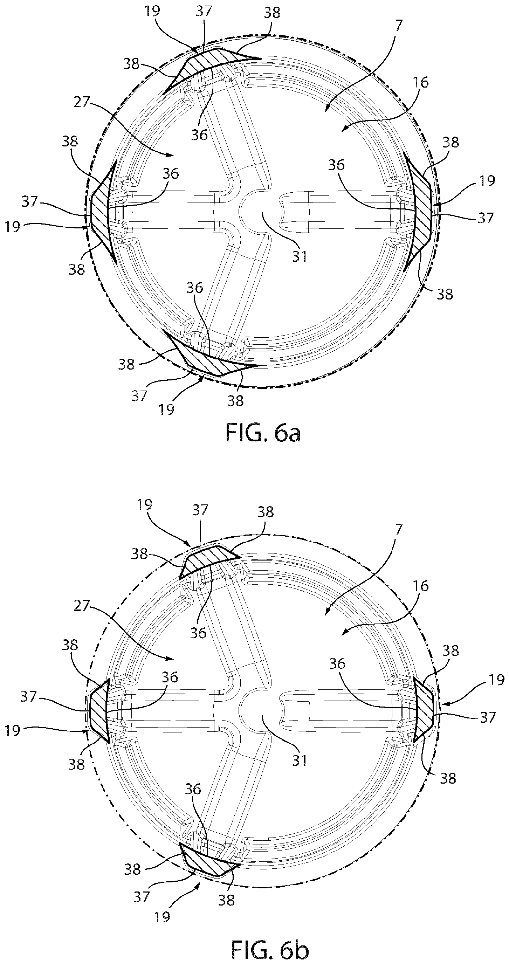

With particular reference to Figures 6a and 6b, each pillar 22 may have a trapezoidal-like cross-section profile with respect to a cross-section plane perpendicular to the respective longitudinal axis G.

It should be noted that trapezoidal-like means that the obtained cross-section can be approximated by means of a trapezoid.

In the specific embodiment disclosed, each cross-section comprises a first base 36, a second base 37 and two lateral sides 38. In particular, each first base 36 is longer than the respective second base 37.

Moreover, each first base 36 results from the intersection with the respective inner surface 30, each second base 37 results from the intersection with the respective central surface portion 34 and each lateral side 38 results from the intersection with the respective lateral surface portion 35.

It can be noted that each first base 36 and the respective two lateral sides 38 may be curved. If one connects the respective intersection points with linear lines, one obtains the trapezoid, which approximates the trapezoidal-like cross-section. In particular, the linear lines approximating/associated with/corresponding to the two lateral sides 38 are not parallel, while the linear line approximating/associated with/corresponding to first base 36 and the linear line approximating/associated with/corresponding to second base 37 are parallel to one another.

In particular, each pillar 22 may widen from the respective first end 23 towards and to the respective second end 24.

Preferentially, the size of the respective first base 36 of a first cross-section profile (see Figure 6a) of a first section closer to the respective second end 24 may be larger than the respective first base 36 of a second cross-section profile (see Figure 6b) of a second section farther distanced from the respective second end 24 than the first section.

With particular reference to Figures 2 and 3, coupling ring 20 may comprise, in particular may consist of, a plurality of main portions 45, each one connected to one respective pillar 22, and a plurality of auxiliary portions 46, each one interposed between two respective main portions 45.

In particular, each main portion 45 may also be interposed between two respective auxiliary portions 46.

Moreover, main portions 45 and auxiliary portions 46 may be integrally connected to one another and/or may be made in a single piece.

According to some preferred non-limiting embodiments, main wall 16 may comprise an annular coupling membrane rupturably connected to the contact portion. In particular, the coupling membrane may be configured such that during the first-time removal of closing element 7, the coupling membrane ruptures so as to allow for the detachment of closing element 7 from the contact portion. In other words, the coupling membrane is configured to rupture the first time main wall 16 is moved from the active position to the inactive position.

Preferentially, the coupling membrane may define an annular and peripheral portion of main wall 16.

According to some preferred-non limiting embodiments, main wall 16 may comprise
- a plurality of radially extending ridge elements 47, in the specific embodiment shown four, each one being interposed between one respective leg element 19 and center 31; and/or
- a plurality of grooves 48, in the specific embodiment shown four, each one extending between a respective pair of leg elements 19 (i.e. each groove 48 may be interposed between a respective first leg element 19 and a respective second leg element 19).

Preferentially, one end of each ridge element 47 is interposed between two respective stiffening ribs 25.

Preferentially, each ridge element 47 may protrude from first surface 27 and/or each groove 48 may be depressed with respect to first surface 27.

According to another aspect of the present invention, opening device 3 may be coupled to main body 2 by means of a molding process. In particular, opening device 3 may be coupled to main body 2 by molding the first portion of opening device 3 to the respective packaging blank.

In order to do so, a mold needs to be provided, which is configured to allow for molding of opening device 3 onto main body 2 and/or the packaging blank. In more detail, the mold is configured to allow for molding and forming the first portion of opening device 3.

In particular, the mold may be configured to allow for the formation of base frame 8, collar 9 and closing element 7.

Even more particular, the mold may be configured to mold base frame 8, collar 9 and closing element 7 in a single piece.

In more detail, the mold is designed such to allow for the formation of leg elements 19, main wall 16 and the contact portion.

In use, a user receives package 1 with closure 13 and main wall 16 being respectively in the closing configuration and the active position so as to respectively cover pouring outlet 11 and the designated pour opening.

Prior to the first control of closure 13 from the closing configuration to the opening configuration and of main wall 16 from the active position to the inactive position, closing element 7, in particular main wall 16, even more particular the coupling membrane, is rupturably fixed to the contact portion.

The user, in order to access the pourable product, needs to control closure 13 from the closing configuration to the opening configuration leading, as main wall 16 is operationally coupled to closure 13 through pull device 17, to a movement of main wall 16 from the active position to the inactive position and a rupturing of closing element 7, in particular of main wall 16, even more particular of the coupling membrane, from the contact portion. This then allows the pourable product to flow from the inner space through and out of flow channel 10.

Each time main wall 16 is arranged again in the active position (by moving closure 13 in the closing configuration) main wall 16 covers the designated pour opening.

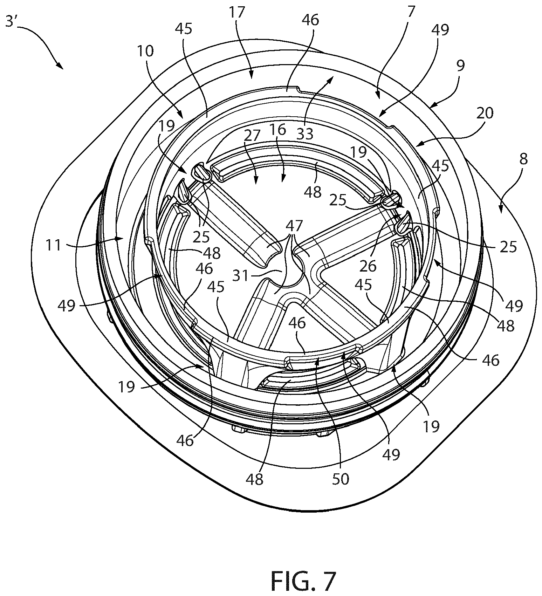

With reference to Figure 7, number 3' indicates an alternative embodiment of an opening device according to the present invention; as opening device 3' is similar to opening device 3, the following description is limited to the differences between them, and using the same references, where possible, for identical or corresponding parts.

In particular, opening device 3' differs from opening device 3 in that each auxiliary portion 46 may comprise a recess 49.

More specifically, one or more recesses 49, in the specific case shown two, may be centered with respect to the respective two main portions 45. Alternatively, or additionally, one or more recesses 49, in the specific case shown two, may be arranged closer to one of the respective two main portions 45 than to the other one of the respective two main portions 45.

Preferentially, each recess 49 is designed so as to allow for the respective auxiliary portion 46 to deform, in particular to deform along a direction radial with respect to central axis F and/or longitudinal axes G.

Moreover, each recess 49 may define a weakening of the respective auxiliary portion 46.

According to some possible non-limiting embodiments, each recess 49 may define a recessed surface 50 of the respective auxiliary portion 46.

In particular, by providing for recesses 49 and/or deformable and/or weakened auxiliary portions 46, the extraction from the mold of closing element 7, in particular of the coupling structure, even more particular of coupling ring 20, is furthermore facilitated.

As operation of opening device 3' is similar to operation of opening device 3, we refer to the above-provided description.

The advantages of opening device 3 and/or opening device 3' and/or of package 1 according to the present invention will be clear from the foregoing description.

In particular, opening device 3 and opening device 3' are provided with pull device 17, which guarantees the needed stability when detaching main wall 16 from the contact portion, but which also ensures to be easily removed from a mold, which is used for molding opening device 3 or opening device 3' onto main body 2 and/or the respective precursor.

Moreover, during demolding, leg elements 19 may elastically deform. Therefore, it is possible to avoid modification of the shape of leg elements 19.

Additionally, leg elements 19 do not break during movement, in particular during the first movement of main wall 16 from the active position to the inactive position.

A further advantage resides, in the opening device 3' has a deformable coupling ring 20 due to recesses 49 and/or recessed surfaces 50.

Clearly, changes may be made to opening device 3 and/or opening device 3' and/or package 1 as described herein without, however, departing from the scope of protection as defined in the accompanying claims.

## Claims

1. Opening device (3, 3') for a package (1) having a designated pour opening and being filled with a pourable product;
the opening device (3, 3') comprises a contact portion and a closing element (7) detachably and/or rupturably attached to the contact portion and configured to close and/or cover the designated pour opening;
wherein the closing element (7) comprises:
- a main wall (16) detachably and/or rupturably attached to the contact portion; and
- a pulling device (17) connected to the main wall (16) and configured to allow for the exertion of a separation force on the main wall (16) so as to detach the closing element (7) from the contact portion;
wherein the pulling device (17) comprises:
- a plurality of leg elements (19) connected to and transversally extending from the main wall (16); and
- a coupling structure (20) connected to the plurality of leg elements (19);
wherein each leg element (19) comprises:
- an elongated pillar (22) extending along a longitudinal axis (G), having a first end (23) and a second end (24), and being connected to the main wall (16) at the first end (23) and to the coupling structure (20) at the second end (24); and
**characterized in that** the pulling device (17) further comprises at least one stiffening rib (25) connected to a connection portion (26) of the pillar (22);
wherein each stiffening rib (25) is integrally connected to the main wall (16);
wherein each pillar (22) consists of the connection portion (26) and a further portion extending from the respective connection portion (26) and to the respective second end (24);
wherein each connection portion (26) comprises the respective first end (23) and has a first extension (E1) along the respective longitudinal axis (G) that equals or is less than half of a second extension (E2) along the respective longitudinal axis (G) of the respective pillar (22) from the first end (23) to the second end (24);
wherein each first extension (E1) and each second extension (E2) are measured along a direction (D) orthogonal to the main wall (16).

2. Opening device according to claim 1, wherein each leg element (19) comprises two stiffening ribs (25) spaced apart from one another and connected to the respective connection portion (26).

3. Opening device according to claim 2, wherein each stiffening rib (25) is connected to a respective lateral section of the respective connection portion (26).

4. Opening device according to any one of the preceding claims, wherein each pillar (22) comprises an inner surface (30) facing towards a center (31) of the main wall (16) and an outer surface (32) opposite to the inner surface (30);
wherein each outer surface (32) comprises a central surface portion (34) and two lateral surface portions (35);
wherein each lateral surface portion (35) has a concave shape.

5. Opening device according to any one of the preceding claims, wherein each pillar (22) has a trapezoidal-like cross-section profile with respect to a cross-section plane perpendicular to the respective longitudinal axis (G).

6. Opening device according to claim 5, wherein each cross-section profile has a first base (36) and a second base (37) shorter than the first base (36);
wherein the size of the respective first base (36) of a first cross-section profile of a first section closer to the respective second end (24) is larger than the respective first base (36) of a second cross-section profile of a second section farther distanced from the respective second end (24) than the first section.

7. Opening device according to any one of the preceding claims, wherein the coupling structure comprises a coupling ring (20) integrally connected to the respective second ends (24) of the plurality of leg elements (19).

8. Opening device according to claim 7, wherein the coupling ring (20) comprises a plurality of main portions (45), each one connected to one respective pillar (22), and a plurality of auxiliary portions (46), each one interposed between two respective main portions (45).

9. Opening device according to claim 8, wherein one or more auxiliary portions (46) is/are deformable and/or at least partially weakened.

10. Opening device according to claim 8 or 9, wherein at least one auxiliary portion (46) comprises a recess (49) and/or a recessed surface (50).

11. Opening device according to any one of the preceding claims, and further comprising:
- a base frame (8) coupling and/or configured to couple the opening device (3, 3') about the designated pour opening;
- a collar (9) extending from the base frame (8) and defining and/or delimiting a flow channel (10) and having a pouring outlet (11); and
- a closure (13) coupled to the collar (9) and configured to selectively open and close the pouring outlet (11) ;
wherein the base frame (8) or the collar (9) comprises the contact portion;
wherein the coupling structure (20) and the closure (13) are connected to one another.

12. Mold configured to allow for molding the opening device (3, 3') according to any one of the proceeding claims onto a main body (2) of a package (1) for a pourable product and/or onto a precursor of a package (1) for a pourable product.

13. Package (1) filled and/or fillable with a pourable product and comprising at least one opening device (3, 3') according to any one of claims 1 to 11.

14. Package according to claim 13, wherein the package (1) comprises a main body (2) having a designated pour opening and being formed from a multilayer composite packaging material, wherein the opening device (3, 3') is coupled onto the main body (2) and about the designated pour opening.

15. Package according to claim 13 or 14, wherein the opening device (3, 3') is molded to a main body (2) of the package (1) and/or onto a precursor of the package (1).

## Patentansprüche

1. Öffnungsvorrichtung (3, 3') für eine Verpackung (1), die eine festgelegte Gießöffnung aufweist und mit einem gießfähigen Produkt gefüllt ist;
wobei die Öffnungsvorrichtung (3, 3') einen Kontaktabschnitt und ein Verschlusselement (7), das lösbar und/oder abreißbar am Kontaktabschnitt befestigt ist und dazu ausgelegt ist, die festgelegte Gießöffnung zu verschließen und/oder abzudecken, umfasst;
wobei das Verschlusselement (7) Folgendes umfasst:
- eine Hauptwand (16), die lösbar und/oder abreißbar am Kontaktabschnitt befestigt ist; und
- eine Zugvorrichtung (17), die mit der Hauptwand (16) verbunden und dazu ausgelegt ist, das Aufbringen einer Trennungskraft auf die Hauptwand (16) zuzulassen, um das Verschlusselement (7) vom Kontaktabschnitt zu lösen;
wobei die Zugvorrichtung (17) Folgendes umfasst:
- mehrere Schenkelelemente (19), die mit der Hauptwand (16) verbunden sind und sich davon schräg erstrecken; und
- eine Kupplungsstruktur (20), die mit den mehreren Schenkelelementen (19) verbunden ist;
wobei jedes Schenkelelement (19) Folgendes umfasst:
- eine längliche Säule (22), die sich entlang einer Längsachse (G) erstreckt, die ein erstes Ende (23) und ein zweites Ende (24) aufweist und am ersten Ende (23) mit der Hauptwand (16) verbunden ist und am zweiten Ende (24) mit der Kupplungsstruktur (20) verbunden ist; und **dadurch gekennzeichnet, dass** die Zugvorrichtung (17) ferner mindestens eine Versteifungsrippe (25) umfasst, die mit einem Verbindungsabschnitt (26) der Säule (22) verbunden ist;
wobei jede Versteifungsrippe (25) mit der Hauptwand (16) integral verbunden ist;
wobei jede Säule (22) aus dem Verbindungsabschnitt (26) und einem weiteren Abschnitt, der sich von dem jeweiligen Verbindungsabschnitt (26) und zum jeweiligen zweiten Ende (24) erstreckt, besteht;
wobei jeder Verbindungsabschnitt (26) das jeweilige erste Ende (23) umfasst und eine erste Ausdehnung (E1) entlang der jeweiligen Längsachse (G) aufweist, die gleich der oder kleiner als die Hälfte der zweiten Ausdehnung (E2) entlang der jeweiligen Längsachse (G) der jeweiligen Säule (22) vom ersten Ende (23) zum zweiten Ende (24) ist;
wobei jede erste Ausdehnung (E1) und jede zweite Ausdehnung (E2) entlang einer Richtung (D) senkrecht zur Hauptwand (16) gemessen werden.

2. Öffnungsvorrichtung nach Anspruch 1, wobei jedes Schenkelelement (19) zwei Versteifungsrippen (25) umfasst, die voneinander beabstandet und mit dem jeweiligen Verbindungsabschnitt (26) verbunden sind.

3. Öffnungsvorrichtung nach Anspruch 2, wobei jede Versteifungsrippe (25) mit einem jeweiligen lateralen Teil des jeweiligen Verbindungsabschnitts (26) verbunden ist.

4. Öffnungsvorrichtung nach einem der vorstehenden Ansprüche, wobei jede Säule (22) eine Innenfläche (30), die der Mitte (31) der Hauptwand (16) zugewandt ist, und eine der Innenfläche (30) entgegengesetzte Außenfläche (32) umfasst;
wobei jede Außenfläche (32) einen mittigen Flächenabschnitt (34) und zwei laterale Flächenabschnitte (35) umfasst;
wobei jeder laterale Flächenabschnitt (35) eine konkave Form aufweist.

5. Öffnungsvorrichtung nach einem der vorstehenden Ansprüche, wobei jede Säule (22) ein trapezförmiges Querschnittsprofil in Bezug zu einer Querschnittsebene senkrecht zur jeweiligen Längsachse (G) aufweist.

6. Öffnungsvorrichtung nach Anspruch 5, wobei jedes Querschnittsprofil eine erste Basis (36) und eine zweite Basis (37), die kürzer ist als die erste Basis (36), aufweist;
wobei die Größe der jeweiligen ersten Basis (36) eines ersten Querschnittsprofils eines ersten Teils, der näher an dem jeweiligen zweiten Ende (24) liegt, größer ist als die jeweilige erste Basis (36) eines zweiten Querschnittsprofils eines zweiten Teils, der vom jeweiligen zweiten Ende (24) weiter entfernt ist als der erste Teil.

7. Öffnungsvorrichtung nach einem der vorstehenden Ansprüche, wobei die Kupplungsstruktur einen Kupplungsring (20) umfasst, der mit den jeweiligen zweiten Enden (24) der mehreren Schenkelelemente (19) integral verbunden ist.

8. Öffnungsvorrichtung nach Anspruch 7, wobei der Kupplungsring (20) mehrere Hauptabschnitte (45), die jeweils mit einer jeweiligen Säule (22) verbunden sind, und mehrere Hilfsabschnitte (46), die jeweils zwischen zwei jeweiligen Hauptabschnitten (45) angeordnet sind, umfasst.

9. Öffnungsvorrichtung nach Anspruch 8, wobei ein oder mehrere Hilfsabschnitte (46) verformbar und/oder zumindest teilweise geschwächt ist/sind.

10. Öffnungsvorrichtung nach Anspruch 8 oder 9, wobei mindestens ein Hilfsabschnitt (46) eine Vertiefung (49) und/oder eine vertiefte Fläche (50) umfasst.

11. Öffnungsvorrichtung nach einem der vorstehenden Ansprüche und ferner Folgendes umfassend:
- einen Grundrahmen (8), der die Öffnungsvorrichtung (3, 3') um die festgelegte Gießöffnung koppelt und/oder dazu ausgelegt ist, dies zu tun;
- eine Manschette (9), die sich vom Grundrahmen (8) erstreckt und einen Strömungskanal (10) definiert und/oder begrenzt und einen Gießauslass (11) aufweist;
und
- einen Verschluss (13), der mit der Manschette (9) gekoppelt und dazu ausgelegt ist, den Gießauslass (11) selektiv zu öffnen und zu schließen;
wobei der Grundrahmen (8) oder die Manschette (9) den Kontaktabschnitt umfasst;
wobei die Kupplungsstruktur (20) und der Verschluss (13) miteinander verbunden sind.

12. Form, die dazu ausgelegt ist, das Formen der Öffnungsvorrichtung (3, 3') nach einem der vorstehenden Ansprüche auf einen Hauptkörper (2) einer Verpackung (1) für ein gießfähiges Produkt und/oder auf eine Vorstufe einer Verpackung (1) für ein gießfähiges Produkt zuzulassen.

13. Verpackung (1), die mit einem gießfähigen Produkt gefüllt und/oder füllbar ist und mindestens eine Öffnungsvorrichtung (3, 3') nach einem der Ansprüche 1 bis 11 umfasst.

14. Verpackung nach Anspruch 13, wobei die Verpackung (1) einen Hauptkörper (2) umfasst, der eine festgelegte Gießöffnung aufweist und aus einem mehrlagigen Verbundverpackungsmaterial ausgebildet ist; wobei die Öffnungsvorrichtung (3, 3') mit dem Hauptkörper (2) und um die festgelegte Gießöffnung gekoppelt ist.

15. Verpackung nach Anspruch 13 oder 14, wobei die Öffnungsvorrichtung (3, 3') auf einen Hauptkörper (2) der Verpackung (1) und/oder auf eine Vorstufe der Verpackung (1) geformt ist.

## Revendications

1. Dispositif d'ouverture (3, 3') pour un emballage (1) ayant une ouverture de versement désignée et rempli d'un produit versable ;
le dispositif d'ouverture (3, 3') comprenant une partie de contact et un élément de fermeture (7) fixé de manière amovible et/ou susceptible d'être rompue à la partie de contact et conçu pour fermer et/ou couvrir l'ouverture de versement désignée ;
l'élément de fermeture (7) comprenant :
une paroi principale (16) fixée de manière amovible et/ou susceptible d'être rompue à la partie de contact ;
et
un dispositif de tirage (17) relié à la paroi principale (16) et conçu pour permettre l'exercice d'une force de séparation sur la paroi principale (16) de sorte à détacher l'élément de fermeture (7) de la partie de contact ;
le dispositif de tirage (17) comprenant :
une pluralité d'éléments jambe (19) reliés à la paroi principale (16) et s'étendant transversalement à partir de celle-ci ; et
une structure d'accouplement (20) reliée à la pluralité d'éléments jambe (19) ;
chaque élément jambe (19) comprenant :
un montant (22) allongé s'étendant le long d'un axe longitudinal (G), ayant une première extrémité (23) et une seconde extrémité (24), et étant relié à la paroi principale (16) au niveau de la première extrémité (23) et à la structure d'accouplement (20) au niveau de la seconde extrémité (24) ; et
**caractérisé en ce que** le dispositif de tirage (17) comprend en outre au moins une nervure de raidissement (25) reliée à une partie de liaison (26) du montant (22) ;
chaque nervure de raidissement (25) étant reliée d'un seul tenant à la paroi principale (16) ;
chaque montant (22) consistant en la partie de liaison (26) et une autre partie s'étendant de la partie de liaison (26) respective jusqu'à la seconde extrémité (24) respective ;
chaque partie de liaison (26) comprenant la première extrémité (23) respective et ayant une première extension (E1) le long de l'axe longitudinal (G) respectif qui est égale ou inférieure à la moitié d'une seconde extension (E2) le long de l'axe longitudinal (G) respectif du montant (22) respectif entre la première extrémité (23) et la seconde extrémité (24) ;
chaque première extension (E1) et chaque seconde extension (E2) étant mesurées le long d'une direction (D) orthogonale à la paroi principale (16).

2. Dispositif d'ouverture selon la revendication 1, chaque élément jambe (19) comprenant deux nervures de raidissement (25) espacées l'une de l'autre et reliées à la partie de liaison (26) respective.

3. Dispositif d'ouverture selon la revendication 2, chaque nervure de raidissement (25) étant reliée à une section latérale respective de la partie de liaison (26) respective.

4. Dispositif d'ouverture selon l'une quelconque des revendications précédentes, chaque montant (22) comprenant une surface intérieure (30) orientée vers un centre (31) de la paroi principale (16) et une surface extérieure (32) opposée à la surface intérieure (30) ;
chaque surface extérieure (32) comprenant une partie de surface centrale (34) et deux parties de surface latérales (35) ;
chaque partie de surface latérale (35) ayant une forme concave.

5. Dispositif d'ouverture selon l'une quelconque des revendications précédentes, chaque montant (22) ayant un profil de section transversale de type trapézoïdal par rapport à un plan de section transversale perpendiculaire à l'axe longitudinal (G) respectif.

6. Dispositif d'ouverture selon la revendication 5, chaque profil de section transversale ayant une première base (36) et une seconde base (37) plus courte que la première base (36) ;
la dimension de la première base (36) respective d'un premier profil de section transversale d'une première section plus proche de la seconde extrémité (24) respective étant plus grande que la première base (36) respective d'un second profil de section transversale d'une seconde section plus éloignée de la seconde extrémité (24) respective que la première section.

7. Dispositif d'ouverture selon l'une quelconque des revendications précédentes, la structure d'accouplement comprenant un anneau d'accouplement (20) relié d'un seul tenant aux secondes extrémités (24) respectives de la pluralité d'éléments jambe (19).

8. Dispositif d'ouverture selon la revendication 7, l'anneau d'accouplement (20) comprenant une pluralité de parties principales (45), chacune reliée à un montant (22) respectif, et une pluralité de parties auxiliaires (46), chacune interposée entre deux parties principales (45) respectives.

9. Dispositif d'ouverture selon la revendication 8, une ou plusieurs parties auxiliaires (46) étant déformables et/ou au moins partiellement affaiblies.

10. Dispositif d'ouverture selon la revendication 8 ou 9, au moins une partie auxiliaire (46) comprenant un renfoncement (49) et/ou une surface en retrait (50).

11. Dispositif d'ouverture selon l'une quelconque des revendications précédentes, et comprenant en outre :
un cadre de base (8) accouplant et/ou conçu pour accoupler le dispositif d'ouverture (3, 3') autour de l'ouverture de versement désignée ;
un col (9) s'étendant à partir du cadre de base (8) et définissant et/ou délimitant un canal d'écoulement (10) et ayant une sortie de versement (11) ; et
une fermeture (13) accouplée au col (9) et conçue pour ouvrir et fermer sélectivement la sortie de versement (11) ;
le cadre de base (8) ou le col (9) comprenant la partie de contact ;
la structure d'accouplement (20) et la fermeture (13) étant reliées l'une à l'autre.

12. Moule conçu pour permettre le moulage du dispositif d'ouverture (3, 3') selon l'une quelconque des revendications précédentes sur un corps principal (2) d'un emballage (1) pour produit versable et/ou sur un précurseur d'un emballage (1) pour produit versable.

13. Emballage (1) rempli et/ou remplissable avec un produit versable et comprenant au moins un dispositif d'ouverture (3, 3') selon l'une quelconque des revendications 1 à 11.

14. Emballage selon la revendication 13, l'emballage (1) comprenant un corps principal (2) ayant une ouverture de versement désignée et étant formé d'un matériau d'emballage composite multicouche, le dispositif d'ouverture (3, 3') étant accouplé sur le corps principal (2) et autour de l'ouverture de versement désignée.

15. Emballage selon la revendication 13 ou 14, le dispositif d'ouverture (3, 3') étant moulé sur un corps principal (2) de l'emballage (1) et/ou sur un précurseur de l'emballage (1).
